# EUROPEAN PATENT APPLICATION

(11) **EP 4 811 228 A1**
(43) Date of publication of application: **23.09.2026**
(21) Application number: 24891342.8
(22) Date of filing: 08.11.2024
(51) Int. Cl.: G06N 20/00, G06F 8/20, G06F 9/451, G06Q 50/10

(54) **INFORMATION PROCESSING METHOD, PROGRAM, AND INFORMATION PROCESSING SYSTEM**

(30) Priority: 13.11.2023 JP 2023193286; 18.01.2024 JP 2024005991; 18.01.2024 JP 2024005992; 18.01.2024 JP 2024005993
(71) Applicant: Exawizards Inc., Tokyo 108-0023 (JP)
(72) Inventor: SAKANE, Yutaka, Tokyo 108-0023 (JP); HARUTA, Makoto, Tokyo 108-0023 (JP); ISHIYAMA, Ko, Tokyo 108-0023 (JP); KUTI, Patrick, Tokyo 108-0023 (JP)
(74) Representative: Abel & Imray LLP
(86) International application number: PCT/JP2024/039823
(87) International publication number: WO 2025/105306

(57) **Abstract**

An information processing device executes an information processing method according to an embodiment. The information processing method includes a processing information acquisition step of acquiring information including unstructured data necessary for processing, a policy information acquisition step of acquiring policy information for the processing of the information, and a processing step of performing the processing in accordance with the information and the policy information.

## Description

### TECHNICAL FIELD

The present disclosure relates to an information processing method, a program and an information processing system.

### BACKGROUND ART

Japanese Patent Application Laid-Open (JP-A) No. 2016-004437 discloses an information processing method that is provided at an information processing device, assigns priorities of plural processing items in accordance with processing requests, and performs information processing in accordance with the assigned priorities.

### SUMMARY OF INVENTION

### TECHNICAL PROBLEM

Ordinarily in an information processing method such as that described above, processing items are structured data defined in advance, and processing requests are specified for structured data. That is, the processing items of processing requests are generally dependent on structured data defined in advance. Thus, there is scope for improvements in processing efficiency and flexibility when handling information that includes unstructured data.

In consideration of the circumstances described above, an object of the present invention is to improve efficiency and flexibility in the processing of information including unstructured data.

### SOLUTION TO PROBLEM

According to an information processing method according to an exemplary embodiment, an information processing method executed by an information processing device includes: a processing information acquisition step of acquiring information including unstructured data necessary for processing; a policy information acquisition step of acquiring policy information for processing of the information; and a processing step of performing processing in accordance with the information and the policy information.

According to a program according to an exemplary embodiment, an information processing method is executed at an information processing device, the information processing method including: a processing information acquisition step of acquiring information necessary for processing; a policy information acquisition step of acquiring policy information for processing of the information; and a processing step of performing processing in accordance with the information and the policy information.

According to an information processing system according to an exemplary embodiment, processing includes: a processing information acquisition step of acquiring information necessary for processing; a policy information acquisition step of acquiring policy information for processing of the information; and a processing step of performing processing in accordance with the information and the policy information.

### ADVANTAGEOUS EFFECTS OF INVENTION

According to the exemplary embodiment, efficiency and flexibility in processing of information including unstructured data may be improved.

### BRIEF DESCRIPTION OF DRAWINGS

Fig. 1 is a diagram showing an example of structures of an information processing system according to a first exemplary embodiment.
Fig. 2 is a diagram showing an example of hardware structures of a server according to the first exemplary embodiment.
Fig. 3 is a diagram showing an example of functional structures of the server according to the first exemplary embodiment.
Fig. 4 is a diagram showing an example of a flow of processing of the information processing system according to the first exemplary embodiment.
Fig. 5 is a diagram schematically showing an example of relationships between a design screen of the information processing system according to the first exemplary embodiment and external tools.
Fig. 6 is a diagram showing an example of the design screen of the information processing system according to the first exemplary embodiment.
Fig. 7 is a diagram showing an example of functional structures of a server according to a second exemplary embodiment.
Fig. 8 is a diagram showing an example of a flow of processing of an information processing system according to the second exemplary embodiment.

### DETAILED DESCRIPTION

### - First Exemplary Embodiment -

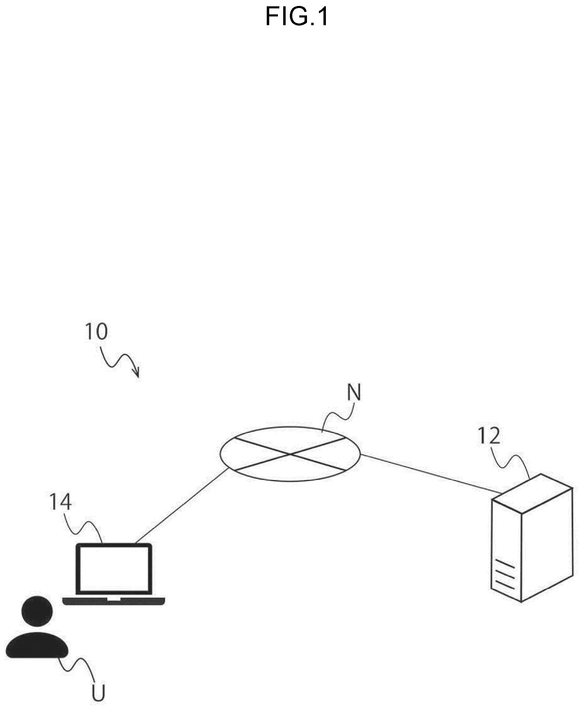

Below, a first exemplary embodiment of an information processing system according to the present disclosure is described using Fig. 1 to Fig. 6. In the drawings, the same reference symbols are assigned to structural elements and portions that are the same or equivalent. Proportional dimensions in the drawings may be exaggerated to aid understanding and may be different from actual proportions.

### - System Outline -

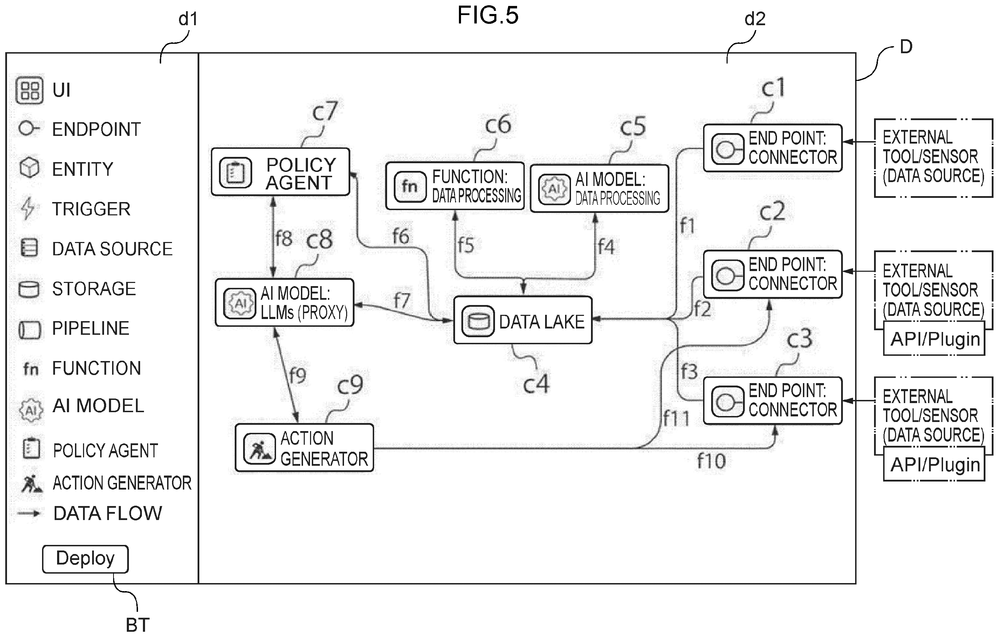

First, an outline of an information processing system 10 according to a present exemplary embodiment is described. The information processing system 10 according to the present exemplary embodiment is an information processing system for a user U to conduct development of a desired system. The desired system referred to here is an information processing system or control system that is structured by a combination including an information processing device and at least one of sensors, equipment and the like. The user designs the desired system by arranging component images c and flow images f (see Fig. 5) on a screen of a user terminal 14. The user appends details of system components (detailed specifications, source code and policy information) to the arranged component images c. The information processing system 10 automatically generates a design file of the system designed by the user and, in accordance with the design file, automatically constructs infrastructure capable of running the system.

### - System structure -

Fig. 1 is a diagram showing an example of structures of the information processing system 10 according to the first exemplary embodiment. As shown in Fig. 1, the information processing system 10 according to the present exemplary embodiment is equipped with a development support device 12 and the user terminal 14, which are connected via a network N to be capable of communicating. The network N is, for example, a wired local area network (LAN), a wireless LAN, the Internet, a public telephony network, a mobile data communications network, or a combination of these.

The user terminal 14 is an example of an information processing device, at which the user U performs operations for entering and displaying various kinds of information. The user terminal 14 may be a personal computer (PC), a smartphone, a tablet terminal, a server apparatus, a microcomputer, a wearable device, or a combination of these.

The development support device 12 is an example of the information processing device, which acquires information entered through the user terminal 14, performs processing based on the information, and outputs results. The development support device 12 may be a personal computer (PC), a smartphone, a tablet terminal, a server apparatus, a microcomputer, or a combination of these. Specific structures and operations of the development support device 12 are described below.

### - Hardware structures -

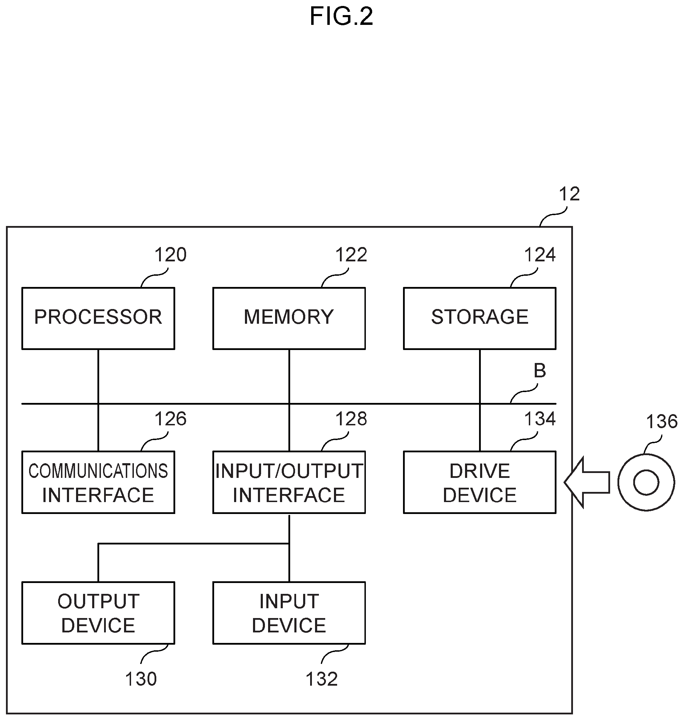

Fig. 2 is a block diagram showing hardware structures of the development support device 12. The development support device 12 is equipped with a processor 120, memory 122, storage 124, a communications interface 126, an input/output interface 128 and a drive device 134, which are connected via a bus B to be capable of communicating with one another.

The processor 120 loads various programs stored in the storage 124 into the memory 122 and executes the programs, thus controlling structures of the development support device 12 and implementing functions of the development support device 12. Programs executed by the processor 120 include an operating system (OS) and a program 220 that is described below, but are not limited to these. By executing the programs, the processor 120 realizes part of a state visualization method according to the present exemplary embodiment. The processor 120 is, for example, a central processing unit (CPU), a microprocessor unit (MPU), a graphics processing unit (GPU), an application-specific integrated circuit (ASIC), a digital signal processor (DSP), or a combination of these.

The memory 122 is, for example, read-only memory (ROM), random access memory (RAM), or a combination of these. ROM is, for example, programmable ROM (PROM), erasable programmable ROM (EPROM), electrically erasable programmable ROM (EEPROM), or a combination of these. RAM is, for example, dynamic RAM (DRAM), static RAM (SRAM), magnetoresistive RAM (MRAM), or a combination of these.

The storage 124 stores the OS, and various programs and various kinds of data that are described below. The storage 124 is, for example, flash memory, a hard disk drive (HDD), a solid-state drive (SSD), storage class memory (SCM), or a combination of these.

The communications interface 126 connects the development support device 12 with external devices, including the user terminal 14, an imaging device 16 and the like, via the network N. The communications interface 126 is, for example, an adapter that is compliant with Bluetooth (registered trademark), Wi-Fi (registered trademark), ZigBee (registered trademark), Ethernet (registered trademark), or optical communications (for example, Fibre Channel), but is not limited to these.

The input/output interface 128 is an interface for connecting an input device 132 and an output device 130 to the development support device 12. The input device 132 is, for example, a mouse, a keyboard, a touch panel, a microphone, a scanner, a camera, various sensors, operation buttons, or a combination of these. The output device 130 is, for example, a display monitor, a projector, a printer, a speaker, a haptic vibrator, or a combination of these.

The drive device 134 reads and writes data to and from a disc medium 136. The drive device 134 is, for example, a magnetic disk drive, an optical disk drive, a magneto-optical disk drive, or a combination of these. The disc medium 109 is, for example, a compact disc (CD), a digital versatile disc (DVD), a floppy disk (FD), a magneto-optical disc (MO), a Blu-ray (registered trademark) disc (BD), or a combination of these.

In the present exemplary embodiment, a program may be written to the memory 122 or storage 124 in a step of fabrication of the development support device 12, may be provided to the development support device 12 via the network N, and may be provided to the development support device 12 via a non-transitory, computer readable recording medium such as the disc medium 136 or the like.

Hardware structures of the user terminal 14 are substantially the same as the hardware structures of the development support device 12 described above. Accordingly, hardware structures of the user terminal 14 are not described here.

### - Functional Structures -

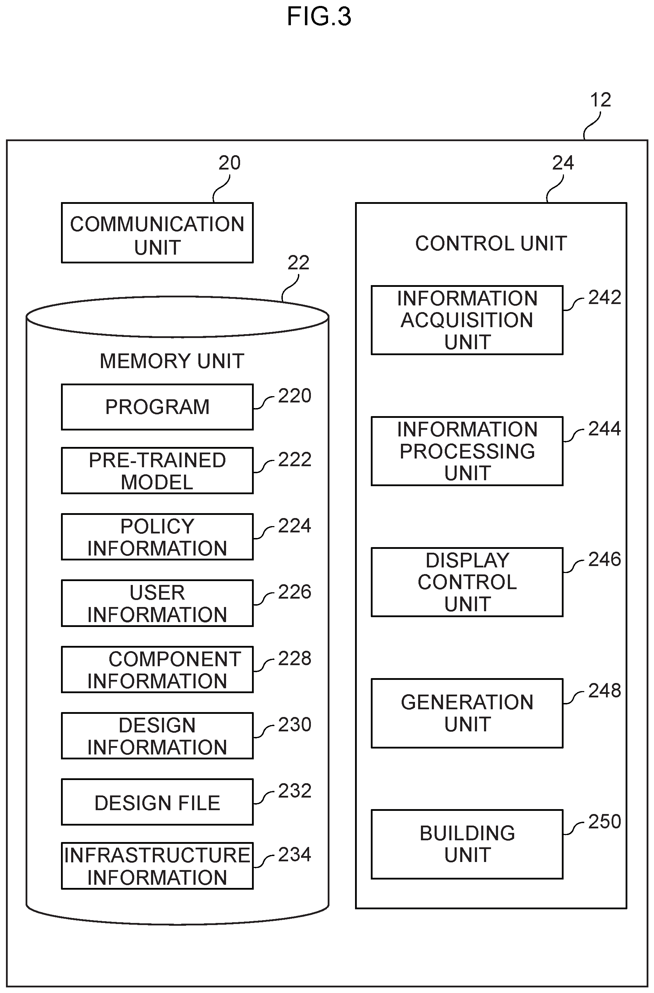

Now, functional structures of the development support device 12 are described. Fig. 3 is a diagram showing an example of the functional structures of the development support device 12. When various programs are being executed, the development support device 12 uses the hardware resources described above to implement various functions. The development support device 12 includes, as functional structures realized by the development support device 12, a communication unit 20, a memory unit 22 and a control unit 24. The functional structures are realized by the processor 120 reading and executing the program 220 that has been stored at the memory 122 or storage 124.

The communication unit 20 is realized by the communications interface 126. The communication unit 20 transmits and receives information to and from the user terminal 14 via the network N. The communication unit 20 receives entered information from the user terminal 14. The communication unit 20 also transmits information to the user terminal 14 and receives requests by the user U from the user terminal 14.

The memory unit 22 is realized by the memory 122 and the storage 124. The memory unit 22 stores the program 220, a pre-trained model 222, policy information 224, user information 226, component information 228, design information 230, a design file 232, and infrastructure information 234.

The pre-trained model 222 is constituted by at least one machine learning model that has been trained. The pre-trained model 222 is, for example, a large language model, which is a model that has been trained on large amounts of text data from articles, documents, websites and the like on the Internet. Text data, referred to as a prompt, is inputted into the pre-trained model 222, and the pre-trained model 222 generates and outputs text data responding to the prompt. The language model of the pre-trained model 222 according to the present exemplary embodiment acquires information including unstructured data as necessary in accordance with the prompt, performs processing, and generates text data as processing results. The meaning of the term "unstructured data" as used herein is intended to include data that is saved without being structured by a method defined beforehand. The meaning of the term "structured data" as used herein is intended to include data that is contained in fixed fields in files and records or the like. The term "structured data" is intended to include semi-structured data.

The pre-trained model 222 performs processing in response to prompts in accordance with the policy information 224, which is described below. The policy information 224 is, for example, text data based on natural language, and represents rules that should be followed in processing. More specifically, the policy information 224 represents, in natural language, that personal information should not be leaked, outputs should not violate public morals, and so forth. The policy information is not limited to these and may be based on access control, data protection, security, laws and regulations, guidelines, business plans and so forth. The policy information may be entered by the user U, may be generated by a system, may be acquired from another data source or the like, or a combination of these. The policy information is not limited to natural language and may be other text data, such as particular prompts, terminology and the like that can be understood only by the pre-trained model, and may be data other than text data, such as voice data, video images or the like. That is, the policy information 224 instructs the system with rules for processing across structured data and unstructured data.

The user information 226 is various kinds of information about the user U, who is registered as a user for use of the information processing system 10. More specifically, the user information 226 includes user identification information for uniquely identifying users, user preference information such as information on interests and the like, user history information including previous user states and the like, user attribute information such as job, organization position and the like, and so forth.

The component information 228 is information relating to system components, which are prepared in advance. The system components are structural elements of a system. The pre-prepared system components include a user interface (UI), an endpoint, an entity, a trigger, a data source, storage, a pipeline, a function, an artificial intelligence (AI) model, a policy agent and an action generator. The pre-prepared system components need not include some of the above, and may include system components other than the above.

A UI is a screen in which outputs of the system are displayed. An endpoint is an address of an application programming interface (API). An entity is a variable storing a value that changes over time. A trigger is an event that causes processing to begin. A data source is a location of data. Storage is a memory device in which data is stored. A pipeline is an outline of a series of processes. A function is computation processing of some kind. A pre-trained model is processing by a pre-trained model, including the pre-trained model 222. A policy agent is an agent employed in processing by the system, which includes the policy information. An action generator generates execution commands for controlling external tools, sensors, data sources and the like in accordance with processing results from the pre-trained model.

The component information 228 includes component images c, component settings, pre-registered components, and flow images f.

A component image c is an image corresponding with a kind of the pre-prepared system components. Respective component images c are prepared as the component images c corresponding to a UI, endpoint, entity, trigger, data source, storage, pipeline, function, pre-trained model, policy agent and action generator.

A component setting is information representing settings according to the kind of a pre-prepared system component. The component setting includes, for example, a name and details of the component, but is not limited thus. For example, settings of a UI that can be mentioned include a name of the UI, details of the UI, entities displayed in a screen, display formats of the entities, and so forth. Settings of a pre-trained model that can be mentioned include a name of the pre-trained model, details of the pre-trained model, inputs and outputs of the pre-trained model, and so forth. Settings of a policy agent that can be mentioned include a name of the policy agent, policy information that is assigned to the policy agent, and so forth. Settings of an action generator that can be mentioned include a name of the action generator, information on a destination of execution commands generated by the action generator (that is, an external tool, sensor, data source or the like), and so forth.

Pre-registered components are system components that are prepared in advance. Pre-registered components may be prepared for each kind of the pre-prepared system components. A user may select a pre-registered component to serve as details of a component.

A flow image f is an image representing a data flow between system components. A flow image f is, for example, an arrow connecting between component images c, but is not limited thus.

The design information 230 is information relating to a system that is designed by a user in a system design screen D. The design screen D is a screen for the user to design the system. The design information 230 includes positions of component images c arranged by the user, component settings of the arranged component images c, and positions of flow images f arranged by the user.

The design file 232 is a file representing the design of the system that is generated from the design information 230. The design file 232 includes component settings of the system components corresponding to the component images c arranged by the user and data flows corresponding to the flow images f arranged by the user. The design file 232 is, for example, an XML file, a YAML file or a JSON file, but is not limited thus.

The infrastructure information 234 is information representing infrastructure of the system, which is designed on the basis of the design file 232. The infrastructure information 234 includes information representing an API gateway, a database (DB), a virtual machine, storage, and network settings.

The control unit 24 is realized by the processor 120 reading the program 220 from the memory 122 (see Fig. 2), executing the program 220, and interacting with other hardware structures. The control unit 24 is provided with an information acquisition unit 242, an information processing unit 244, a display control unit 246, a generation unit 248, and a building unit 250.

The information acquisition unit 242 acquires various kinds of information necessary for processing by the information processing unit 244. More specifically, the information acquisition unit 242 acquires information including unstructured data necessary for processing, policy information for processing of that information, and processing results. These kinds of information may be information stored at the memory unit 22, and may be information acquired from an external data source or the like. When the policy information 224 relating to the processing is stored at the memory unit 22, the information acquisition unit 242 acquires that policy information 224. The information acquisition unit 242 also acquires information relating to functions that are capable of executing processing results, including external tools, sensors and the like.

The information processing unit 244 performs information processing with the pre-trained model 222. More specifically, when a prompt entered by a user that instructs processing is inputted, in accordance with the prompt, text data is outputted as processing results based on the various kinds of information acquired by the information acquisition unit 242, including the policy information. When information relating to a function capable of executing the processing results has been acquired, the information processing unit 244 uses this function to output the processing results. For example, when spreadsheet software is connected to the information processing system 10 as an external tool, information relating to spreadsheet functions is acquired to serve as a function capable of executing the processing results. On the basis of this information, the information processing unit 244 generates execution commands for the spreadsheet software as required so as to use the spreadsheet functions to output the processing results.

The information processing unit 244 uses the user information 226 to execute processing in accordance with one or both of content of a prompt and the policy information 224. That is, when the policy information 224 is to alter processing results responding to a prompt in accordance with an attribute of the user, the information processing unit 244 uses the user information 226 to regulate the processing results. As a more specific example of this processing, when a prompt with content enquiring about personal information is entered by the user U, the information processing unit 244 makes a determination from the user information 226 of the user U as to whether the user U is in an administrative role. If the user information 226 corresponds to an administrative role, the information processing unit 244 carries out processing so as to output the personal information in response to the prompt, but if the user information 226 does not correspond to an administrative role, the information processing unit 244 carries out processing so as not to output the personal information in spite of the prompt. For a user U who inputs prompts violating the policy information 224 on at least a predetermined number of occasions, the information processing unit 244 attaches information indicating that the user U is a suspicious user, and may give a warning to the user U identified as a suspicious user, implement restrictions on processing and the like.

The display control unit 246 controls displays at the display monitor in response to user operations. For example, the display control unit 246 displays the design screen D at the display monitor and, in response to user operations, arranges the component images c and flow images f in the design screen D. The display control unit 246 stores, at the memory unit 22 as the design information 230, arrangements of the component images c arranged by the user, component settings of the arranged component images c, and arrangements of the flow images f arranged by the user.

The generation unit 248 generates the design file 232 on the basis of the design information 230 stored at the memory unit 22. Thus, a design file of a system is generated that corresponds with the component images c arranged in the design screen D, the component settings, and the flow images f arranged in the design screen D. The generation unit 248 stores the generated design file 232 at the memory unit 22.

The building unit 250 builds infrastructure of the system on the basis of the design file 232 stored at the memory unit 22, such that the system represented by the design file 232 is operable. Building infrastructure includes starting up an API gateway, starting up a database, starting up a virtual machine, preparing storage, and specifying a network. Building the infrastructure need not include some of the above, and may include tasks other than the above. The building unit 250 stores information representing the built infrastructure at the memory unit 22 as the infrastructure information 234.

### - Processing executed by the information processing system 10 -

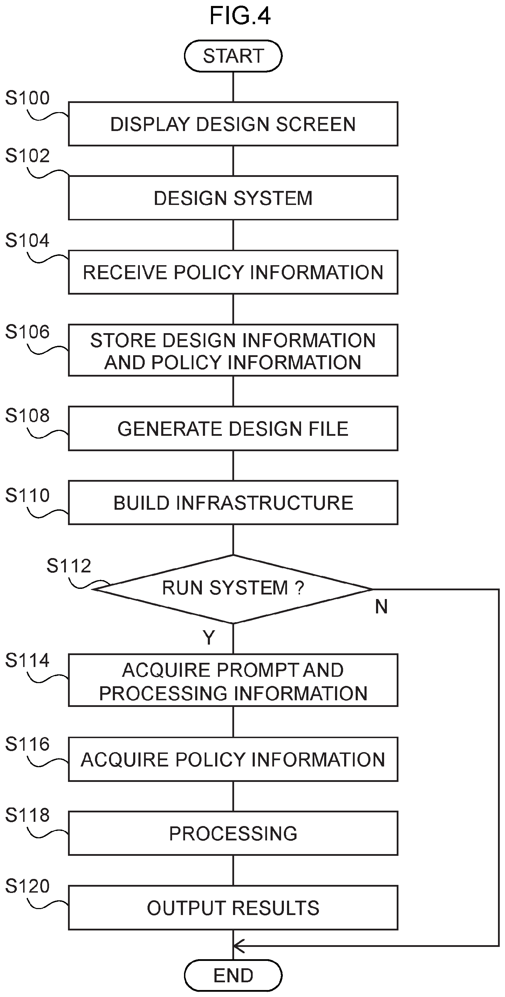

Now, operation of the information processing system 10 is described. Fig. 4 is a flowchart showing an example of a flow of processing by the information processing system 10. This processing is performed by the processor 120 reading the program 220 stored at the storage 124, loading the program 220 into the memory 122 and executing the program 220. Although not shown in the drawings, during processing in accordance with the program 220, the processing ends when the processor 120 receives information of an end-running operation of the information processing system 10 or information of the end of operations by the user terminal 14 at a determination during the execution (these are referred to simply as "an end operation").

The processor 120 refers to the component information 228 and displays the design screen D at the display monitor of the user terminal 14 (step S100). Fig. 5 is a diagram showing an example of the design screen D. The design screen D in Fig. 5 includes a selection region d1 and a design region d2.

The selection region d1 is a region in which the user selects operation objects. The selection region d1 is disposed at the left side of the design screen D. A cursor, a list of system components that can be arranged in the design screen D (a UI, endpoint, entity, trigger, data source, storage, pipeline, function, pre-trained model, policy agent and action generator), and data flows that can connect between the component images c are displayed in the selection region d1 to be selectable. A deploy button BT is also disposed in the selection region d1. The deploy button BT is a button for deploying the system that the user has designed.

The design region d2 is a region for the user to design a system in. The design region d2 is disposed at the right side of the selection region d1. The component images c and flow images f may be freely arranged in the design region d2. Component settings, including names and details of the components, may be appended to the component images c arranged in the design region d2.

Next, the user designs a desired system in the design screen D (step S102). More specifically, the user selects a system component in the selection region d1 and selects a desired position in the design region d2. The processor 120 (the display control unit 246) receives the user operations and arranges the component image c corresponding to the system component selected by the user in the selection region d1 at the position selected by the user in the design region d2. By repeating these operations, the user arranges plural component images c in the design region d2.

The user selects the data flow in the selection region d1 and selects two of the component images c arranged in the design region d2. The processor 120 receives these user operations and arranges in the design region d2 a flow image (an arrow) from the first component image c selected by the user to the second component image c, or a flow image f (arrows) from the first component image c and the second component image c towards one another.

The user selects a component image c arranged in the design region d2. The processor 120 receives this user operation and displays a settings screen for the selected component image c. In the settings screen, the user may add component settings, including a name and details of the system component. As the details of the system component, the user may select a registered component, or may directly enter source code or natural text. The details of the system component may also be left blank.

In the example in Fig. 5, component images c1 to c9 and flow images f1 to f11 have been arranged in the design region d2.

The component images c1, c2 and c3 are component images c corresponding to endpoints, the names of which are set to "connector". The component images c corresponding to endpoints are visually distinguished from other component images c by marks that are not shown in the drawings, a different color from the other component images c or the like. Thus, even when the names of the component images c are difficult to see, due to being small when the whole of the system design screen is shrunk on the user terminal 14 or the like, the arrangements of endpoints, which are input and output points of information, may be perceived at a glance and flows of information in the system are easier to perceive. In the present exemplary embodiment, the appearances of the component images c corresponding to endpoints are different from other component images c, but this is not limiting. The appearances of other component images c may also be altered, and the appearances of all the component images c may be respectively different.

The component image c4 is a component image c corresponding to storage, the name of which is set to "data lake". The component image c5 is a component image c corresponding to a pre-trained model, the name of which is set to "data processing". The component image c6 is a component image c corresponding to a function, the name of which is set to "data processing". The component image c7 is a component image c corresponding to a policy agent, the name of which is set to "policy agent". The component image c8 is a component image c corresponding to a pre-trained model, the name of which is set to "LLMs". The component image c8 is actually a proxy for pre-trained models. That is, when requests are sent to pre-trained models via the proxy, large quantities of requests going directly to a single pre-trained model may be avoided, with the requests being distributed between plural pre-trained models. Thus, performance of the system may be improved. By controlling requests and responses, the proxy may filter unsuitable requests. Thus, unauthorized access and attacks on the pre-trained models themselves may be avoided. Moreover, a request sent through the proxy may be preprocessed or transformed to a form that is easier for a pre-trained model to process. For example, the proxy may send a request incorporating the policy information 224. As a result, efficiency and performance of a pre-trained model may be improved even while complying with the policy information 224. Further still, when plural pre-trained models are employed, centralized data management via the proxy is possible. As a result, consistency of the data is preserved and troubleshooting is simpler. When demand on the system increases, new pre-trained model instances may be added via the proxy. Thus, scaling up is simple. Moreover, switching to different pre-trained models is simple.

The component image c9 is a component image c corresponding to an action generator, the name of which is set to "action generator".

The flow image f1 is a flow image f from the component image c1 to the component image c4. The flow image f2 is a flow image f from the component image c2 to the component image c4. The flow image f3 is a flow image f from the component image c3 to the component image c4. The flow image f4 is a flow image f linking the component image c4 and the component image c5 with one another. The flow image f5 is a flow image f linking the component image c4 and the component image c6 with one another. The flow image f6 is a flow image f linking the component image c4 and the component image c7 with one another. The flow image f7 is a flow image f linking the component image c4 and the component image c8 with one another. The flow image f8 is a flow image f linking the component image c7 and the component image c8 with one another. The flow image f9 is a flow image f linking the component image c8 and the component image c9 with one another. The flow image f10 is a flow image f from the component image c9 to the component image c3. The flow image f11 is a flow image f from the component image c9 to the component image c2.

The system in Fig. 5 is, as an example, a system that links to data sources, meaning plural external tools and sensors, acquires respective sets of information including unstructured data, performs processing with pre-trained models and the like, including large language models, and then uses external tools and the like to implement processing results.

A user may design a system as described above just by arranging the component images c and flow images f in the design screen D. User operations for arranging the component images c and flow images f are not limited by the example described above.

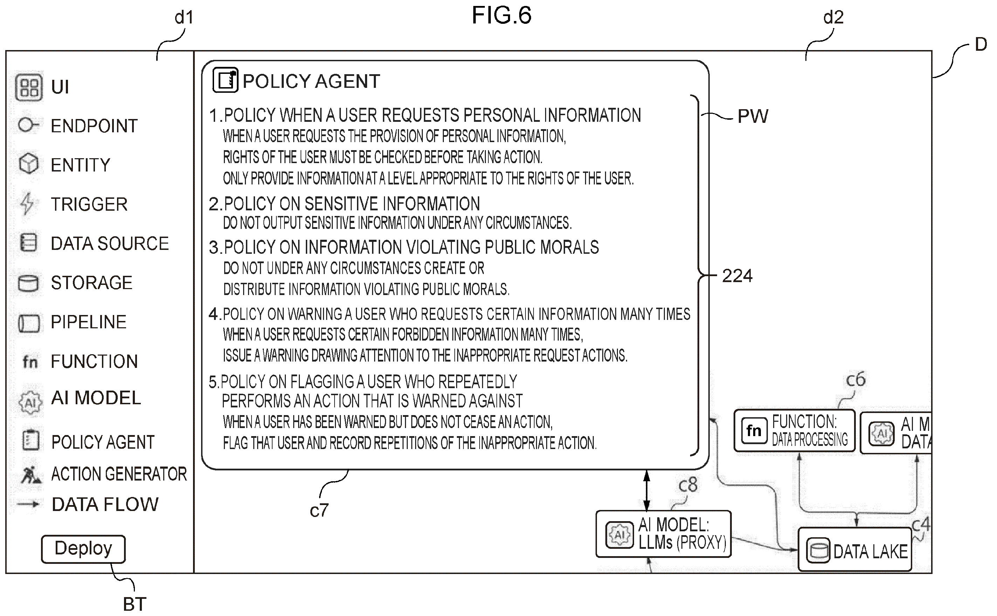

The processor 120 performs processing to receive entry or modification of the policy information 224 (step S104). When the component image c7 corresponding to the policy agent is selected, a policy information entry screen PW, as in the example in Fig. 6, is displayed and the user U may enter or modify the policy information 224 as natural language.

When the user has finished design of the system, the user selects the deploy button BT. When the deploy button BT is selected, the processor 120 stores at the memory unit 22 the design information 230, which includes the arrangements of the component images c arranged in the design screen D by the user, the component settings of the arranged component images c, and the arrangements of the flow images f arranged by the user (step S106).

Then, the processor 120 generates the design file 232 on the basis of the design information 230 stored at the memory unit 22 (step S108). That is, the processor 120 (the generation unit 248) generates the design file 232 on the basis of the arrangements of the component images c arranged in the design screen D by the user, the component settings of the arranged component images c, and the arrangements of the flow images f arranged by the user. The generation unit 248 stores the generated design file 232 at the memory unit 22.

Thereafter, the processor 120 (the building unit 250) builds the infrastructure of the system on the basis of the design file 232 stored at the memory unit 22 (step S110). The processor 120 stores the infrastructure information 234 relating to the built infrastructure at the memory unit 22.

The processor 120 makes a determination as to whether a command to start running of the built system has been given (step S112). When the start of running has not been commanded ("no" in step S112), the processor 120 ends the processing. On the other hand, when the start of running has been commanded ("yes" in step S112), the processor 120 acquires prompts and information necessary for processing in accordance with the prompts (step S114).

The processor 120 acquires the policy information 224 relating to the processing (step S116). Then the processor 120 executes processing in accordance with the acquired information and the policy information 224 (step S118).

The processor 120 outputs processing results (step S120), and ends the processing. This output can include displays at the display monitor of the user terminal 14, implementation of processing by the action generator at external tools, sensors, data sources and the like, and so forth.

### - Operational effects of the first exemplary embodiment -

According to the information processing system 10 according to the present exemplary embodiment, control may be performed to handle information including unstructured data in accordance with the policy information 224, by executing a processing information acquisition step of acquiring information including unstructured data necessary for processing, a policy information acquisition step of acquiring policy information for processing of the information, and a processing step of performing processing in accordance with the information and the policy information. In consequence, efficiency and flexibility in processing of information including unstructured data may be improved.

Because the policy information 224 is information based on natural language, rules for processing may be provided to the system without any need for coding, specialist language or the like. Therefore, even a non-engineer may build a system with ease. Because representation of the policy information 224 by natural language may be broadly applied, processing may be controlled more concretely. Because the policy information 224 is written in natural language, new ideas may be tried out quickly, and time required for development and testing may be reduced.

The policy information 224 may be entered and/or modified in the policy information entry screen PW, which is displayed at the design screen in which the system is built by arranging the pre-prepared component images c corresponding to kinds of system components and the flow images f representing data flows between the system components. Therefore, the user U may design a desired system just by arranging the component images c and flow images f. Details of a system component may be freely added after the component image c is arranged. Because the policy information 224 may be entered or modified in the same screen as the design screen, formulating the policy information 224 while observing flows of information and processing is easy. Therefore, development time may be shortened further, and consistent operations in which omission of rules or the like is suppressed may be implemented more easily.

When a policy agent (the component image c7) that controls content and application targets of the policy information 224 is arranged in the design screen in which the system is built by arranging the component images c and flow images f, then even if a pre-trained model, external tool or the like is replaced, the same policy information 224 may be applied. That is, the whole system need not be replaced in association with a change of part of the system: the system may be redeployed with only structures that should change being changed and other structures staying as before. Therefore, even with a system that involves large changes due to efficiency, technological progress and the like, updates may be applied with savings in time and costs.

An execution capability information acquisition step, of acquiring information relating to functions capable of executing processing results arising in the processing step, and an execution command generation step, of generating execution commands as required in accordance with the processing results of the information, may be executed by the action generator. Therefore, the processing results may be incorporated in a more practical system, and improvements in productivity and efficiency may be expected.

### - Second Exemplary Embodiment -

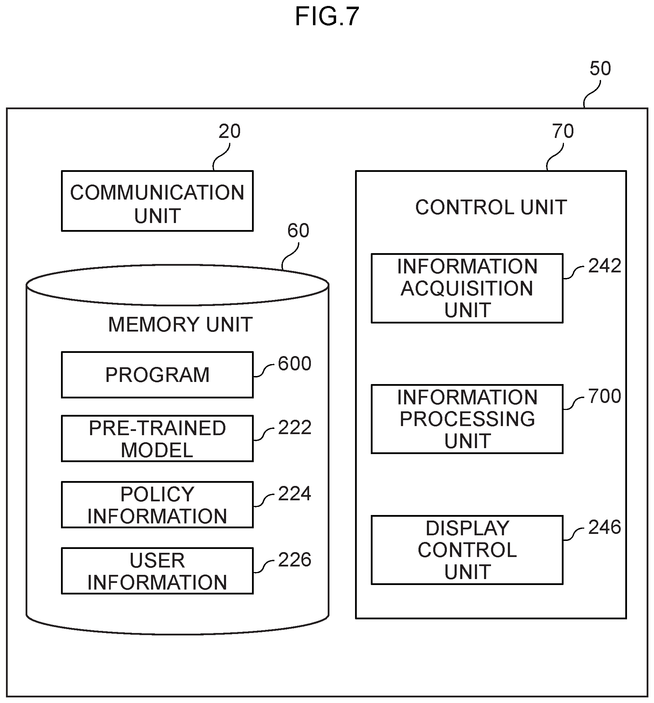

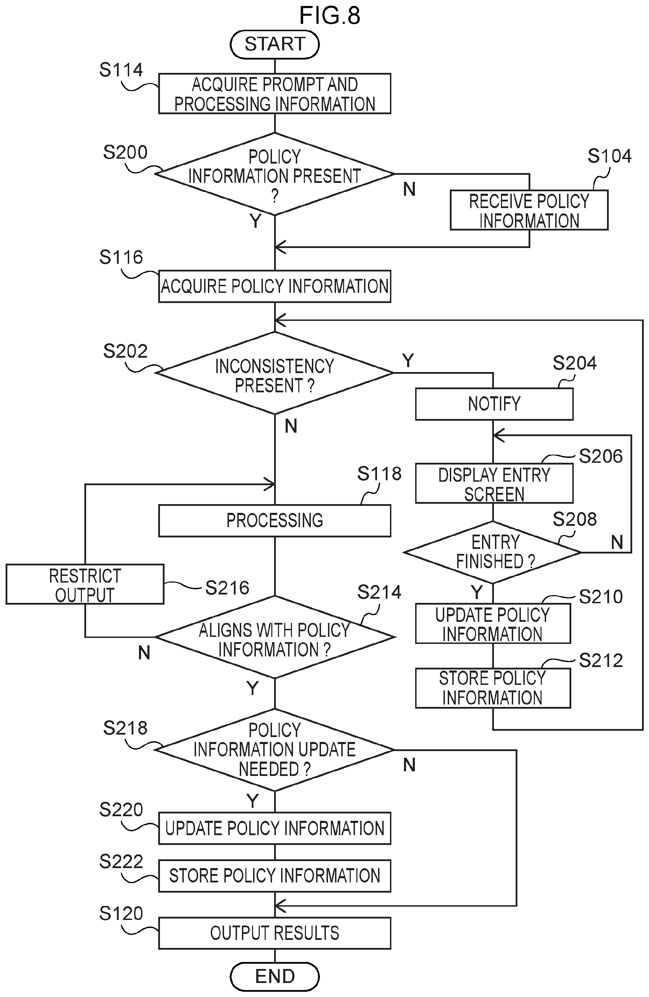

Now, an information processing system 500 according to a second exemplary embodiment of the present disclosure is described using Fig. 7 and Fig. 8. The information processing system 500 according to the second exemplary embodiment is basically similar in structure to the first exemplary embodiment, but features updates of the policy information 224 and determinations of whether or not inconsistencies are present in the policy information 224. Structures that are the same as in the first exemplary embodiment are assigned the same reference symbols and are not described here.

### - System Outline -

The information processing system 500 is, for example, a system excluding the design system recited in the first exemplary embodiment. That is, the information processing system 500 is an already deployed system, and is capable of updates of the policy information 224 in the system and determinations of whether or not inconsistencies are present in the policy information 224.

### - Functional Structures -

Now, functional structures of a development support device 50 are described. Fig. 7 is a diagram showing an example of functional structures of the development support device 50. When various programs are being executed, the development support device 50 uses hardware resources similar to the first exemplary embodiment to implement various functions. The development support device 50 includes, as functional structures realized by the development support device 50, the communication unit 20, a memory unit 60 and a control unit 70. The functional structures are realized by the processor 120 reading and executing a program 600 that has been stored at the memory 122 or storage 124.

The memory unit 60 is realized by the memory 122 and the storage 124. The memory unit 22 stores the program 600, the pre-trained model 222, the policy information 224 and the user information 226.

The control unit 70 is realized by the processor 120 reading the program 600 from the memory 122 (see Fig. 2), executing the program 600, and interacting with other hardware structures. The control unit 70 is provided with the information acquisition unit 242, an information processing unit 700, and the display control unit 246.

Similarly to the information processing unit 244 according to the first exemplary embodiment, the information processing unit 700 performs information processing with the pre-trained model 222. The information processing unit 244 also makes determinations of inconsistency in the content of the policy information 224, and gives a notification when a determination result indicates that an inconsistency is present. The term "inconsistency" as used herein is intended to include situations in which the content of the policy information 224 lacks coherence, situations in which the content of the policy information 224 is self-contradictory, and the like. For example, a situation in which information recited in the policy information 224 in relation to a user performing access control differs between plural text sections may be mentioned. A notification may be an alert display to the user U indicating that there is an inconsistency in the policy information 224, may be a display of text data of the policy information 224 with inconsistent parts highlighted, and may be an alternative notification.

The information processing unit 700 is capable of updating the policy information 224 in accordance with processing results based on a prompt. As a specific example, when policy information is not explicitly recited in the initial policy information 224 but should be recited given an overall tendency of the policy information 224, the information processing unit 700 incorporates this policy information in the policy information 224. Alternatively, when a processing instruction prompt is entered whose execution would not be appropriate from a legal perspective, even if not recited in the initial policy information 224, the information processing unit 700 determines that execution of the prompt is not appropriate and updates the policy information 224 so as to indicate that this instruction and similar processing should not be carried out. As further alternatives, the information processing unit 700 may update the policy information 224 so as to correct errors in the policy information 224, so as to correct an inconsistency when the information processing unit 700 determines that an inconsistency is present in the previous policy information 224, and so forth.

The information processing unit 700 determines whether or not processing results align with the policy information 224, and when the result of this determination is that the processing results align with the policy information 224, outputs those processing results. On the other hand, when the result of the determination is that the processing results do not align with the policy information 224, the information processing unit 700 does not output the processing results. When processing results are not outputted, the information processing unit 700 may perform re-processing, and may append a re-processing instruction indicating that the processing results the information processing unit 700 determined not to output are not desirable. As a result, processing results may be more closely aligned with the policy information. Further, the information processing unit 700 may plot and keep a list of flags and the like of processing results that the information processing unit 700 determines not to output, and may be configured to perform re-processing in accordance with this list. Hence, processing results may be even more closely aligned with the policy information. The determination as to whether or not processing results align with the policy information 224 is performed by a pre-trained model separate from the pre-trained model performing the processing. As a result, flexibility may be provided in that improved performance due to parallelism between processing and determinations, individual tuning and the like is enabled. In the present exemplary embodiment, the processing and determinations are performed by separate pre-trained models, but this is not limiting; the processing and determinations may be performed by the same pre-trained model.

The display control unit 246 may output processing results that are outputted by the information processing unit 700 to the user terminal 14.

### - Processing executed by the information processing system 500 -

Now, operation of the information processing system 500 is described. Fig. 8 is a flowchart showing an example of a flow of processing by the information processing system 500. The processor 120 performs the processing by reading the program 600 stored at the storage 124, loading the program 600 into the memory 122 and executing the program 600. Processing that is the same as in the first exemplary embodiment is assigned the same reference symbols and is not described here.

After the processing of step S114, the processor 120 makes a determination as to whether the policy information 224 has been registered (step S200). When the policy information 224 is not registered ("no" in step S200), the processor 120 proceeds to the processing of step S104. On the other hand, when the policy information 224 is registered ("yes" in step S200), the processor 120 advances to the processing of step S116.

After the processing of step S116, the processor 120 makes a determination as to whether or not an inconsistency is present in the content of the policy information 224 (step S202). When there is no inconsistency ("no" in step S202), the processor 120 advances to the processing of step S118. On the other hand, when there is an inconsistency ("yes" in step S202), the processor 120 notifies the user terminal 14 that an inconsistency is present (step S204) and displays (step S206) the policy information entry screen PW (see Fig. 6).

The processor 120 makes a determination as to whether entry of the policy information 224 has finished (step S208). When the result of the determination is that entry has not finished ("no" in step S208), the processor 120 returns to the processing of step S206. On the other hand, when the result of the determination is that entry has finished ("yes" in step S208), the processor 120 updates the policy information 224 with the entered information (step S210), stores the policy information 224 in the memory unit 60 (step S212), and returns to the processing of step S202.

After the processing of step S118, the processor 120 makes a determination as to whether processing results align with the policy information 224 (step S214). When the processing results do not align with the policy information 224 ("no" in step S214), the processor 120 assigns an output restriction flag to the output results and does not output the output results, and the processor 120 returns to the processing of step S118. On the other hand, when the processing results do align with the policy information 224 ("yes" in step S214), the processor 120 makes a determination as to whether or not an update of the policy information 224 in accordance with the output results is necessary (step S218). When the processor 120 determines that an update of the policy information 224 is not necessary ("no" in step S218), the processor 120 advances to the processing of step S120. On the other hand, when the processor 120 determines that an update of the policy information 224 is necessary ("yes" in step S218), the processor 120 updates the policy information 224 in accordance with the processing results (step S220), stores the policy information 224 in the memory unit 60 (step S222), and advances to the processing of step S120.

### - Operational effects of the second exemplary embodiment -

Because the information processing system 500 according to the present exemplary embodiment is similar in configuration to the first exemplary embodiment, apart from updating the policy information 224, determining whether an inconsistency is present in the policy information 224 and the like, the same operational effects as in the first exemplary embodiment are provided. In addition, because the information processing system 500 is capable of updating the policy information in accordance with the processing results of the processing step, the policy information 224 may more effectively take account of operational conditions. As a result, output results with higher precision may be obtained.

The information processing system 500 determines whether or not an inconsistency is present in the content of the policy information 224 and, when an inconsistency is present, may perform a notification step to give a notification and then make the policy information 224 clearer. This may lead to an improvement in the trustworthiness of processing results.

### - First variant example -

The exemplary embodiment described above does not include the structure of the design system according to the first exemplary embodiment in which a system is built in the design screen of the component images c and flow images f, but a configuration including this design system is applicable. Further, the first exemplary embodiment may have a configuration that does not include the design system.

The information processing system described above may be considered from a different perspective. For example, the problem to be solved by the information processing system according to the present exemplary embodiment (the object) may be considered as "improving operational efficiency by generating execution commands of processing results to suit functions capable of executing the same".

Considering the problem as stated above, an invention that serves as means for solving the problem is, for example, as described below.

An information processing method executed by an information processing device, the information processing method including:
a processing information acquisition step of acquiring information necessary for processing;
   an execution capability information acquisition step of acquiring information relating to a function capable of executing a processing result arising in a processing step; and
an execution command generation step of generating an execution command as required in accordance with the information acquired in the execution capability information acquisition step and the processing result of the information

According to the structure described above, the execution capability information acquisition step, of acquiring information relating to functions capable of executing processing results arising in the processing step, and the execution command generation step, of generating execution commands as required in accordance with processing results of information, may be executed. Therefore, even when functions that are capable of executing processing results change in accordance with states of the system itself, states of connection with external tools and the like, commands to execute processing results may be generated from information on functions that are capable of executing the processing results of the moment on the basis of the acquired execution capability information. Therefore, processing results may be incorporated in a more practical system according to conditions, and improvements in productivity and efficiency may be expected.

### - Second variant example -

If the information processing system described above is considered from a different perspective, the problem to be solved by the information processing system according to the present exemplary embodiment (the object) may be considered as "for a prompt entered by a user to instruct processing, giving feedback to the user to enter a prompt aligning with policy information".

Considering the problem as stated above, an invention that serves as means for solving the problem is, for example, as described below.

An information processing method executed by an information processing device, the information processing method including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with a processing instruction and the information when the instruction and the information are inputted, and when the instruction violates the policy information, amending the instruction so as to align with the policy information and presenting an amendment result before executing the processing.

According to the structure described above, when a prompt that is an instruction for processing violates the policy information, the information processing device amends the prompt such that the prompt aligns with the policy information, that is, the prompt follows the policy information, presents the amendment result, and then performs the processing with the amendment result. Therefore, a prompt that itself has a large effect on processing results is made to align with the policy information, which may greatly affect the processing results. Because the amendment result is presented by the information processing device, the user may be aware that the prompt the user entered has been amended so as to conform with the policy information. Thus, suitable prompt entries and suitable formulation of the policy information may be performed. That is, because feedback is given to the user, the user may be prompted to enter prompts that align with the policy information, which may contribute to effective formulation of the policy information.

### - Third variant example -

If the information processing system described above is considered from a different perspective, the problem to be solved by the information processing system according to the present exemplary embodiment (the object) may be considered as "enabling rapid system building".

Considering the problem as stated above, an invention that serves as means for solving the problem is, for example, as described below.

An information processing method executed by an information processing device, the information processing method including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted;
wherein the policy information can be at least one of entered and modified in a policy information entry screen that is displayed at a design screen, component images that correspond to pre-prepared kinds of system components and flow images that represent data flows between the system components being arranged in the design screen for building a system, and
for each of predetermined combinations of the component images and flow images included in the policy information entry screen, a status can be set to one of public, limited public or private, and a condition of publication of the predetermined combination to another party is controlled in accordance with the status thereof.

According to the structure described above, in the design screen in which the system is built by arrangement of the component images and flow images, a publication status may be set for each of the predetermined combinations of the component images and flow images included in the policy information entry screen. Therefore, in a settings screen for the whole system, combinations such as processing that uses open source code, portions that are to be openly provided to other parties and the like may be demarcated and made public. Thus, combinations of public portions may be re-used. As a result, system building may be performed rapidly. Moreover, various benefits may be obtained through provision to other parties. On the other hand, in a design screen for the whole of an organization's internal system, combinations such as portions that are to be provided only to relevant people and the like may be demarcated and set to limited publication. Thus, system building may be performed rapidly while controlling publication scopes and information security. In the design screen for the whole of an organization's internal system, combinations such as portions including specialist knowledge, secret information or the like may be demarcated and made private. Thus, information security may be improved. Thus, because these publication statuses may be set for each of the predetermined combinations of the component images and flow images included in the policy information entry screen at the design screen, both rapid system building and information security assurance may be achieved.

### - Supplementary notes -

The present exemplary embodiments include the following disclosures.

### - Supplementary note 1 -

An information processing method executed by an information processing device includes:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted.

### - Supplementary note 2 -

In the information processing method according to supplementary note 1, the policy information is information based on natural language.

### - Supplementary note 3 -

In the information processing method according to supplementary note 1, the policy information can be updated in accordance with a processing result of the processing step.

### - Supplementary note 4 -

The information processing method according to supplementary note 1 includes a notification step of determining whether or not an inconsistency is present in content of the policy information and, when an inconsistency is present, giving a notification.

### - Supplementary note 5 -

In the information processing method according to supplementary note 1, the policy information can be at least one of entered and modified in a policy information entry screen that is displayed at a design screen, component images that correspond to pre-prepared kinds of system components and flow images that represent data flows between the system components being arranged in the design screen for building a system.

### - Supplementary note 6 -

The information processing method according to supplementary note 1 includes a determination step of acquiring a processing result arising in the processing step, determining whether or not the processing result aligns with the policy information, and when the determining determines that the processing result does not align with the policy information, restricting output of the processing result.

### - Supplementary note 7 -

The information processing method according to supplementary note 1 includes:
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

### - Supplementary note 8 -

A program causes an information processing device to execute an information processing method including:
a processing information acquisition step of acquiring information necessary for processing;
a policy information acquisition step of acquiring policy information for processing of the information; and
a processing step of performing processing in accordance with the information and the policy information.

### - Supplementary note 9 -

An information processing system includes an information processing device that executes processing including:
a processing information acquisition step of acquiring information necessary for processing;
a policy information acquisition step of acquiring policy information for processing of the information; and
a processing step of performing processing in accordance with the information and the policy information.

### - Supplementary note 10 -

An information processing method executed by an information processing device includes:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be updated in accordance with a processing result of the processing step.

### - Supplementary note 11 -

An information processing method executed by an information processing device includes:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a notification step of determining whether or not an inconsistency is present in content of the policy information and, when an inconsistency is present, giving a notification.

### - Supplementary note 12 -

An information processing method executed by an information processing device includes:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system.

### - Supplementary note 13 -

An information processing method executed by an information processing device includes:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a determination step of acquiring a processing result arising in the processing step, determining whether or not the processing result aligns with the policy information, and when the determining determines that the processing result does not align with the policy information, restricting output of the processing result.

### - Supplementary note 14 -

An information processing method executed by an information processing device includes:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

### - Supplementary note 15 -

In the information processing method according to any one of supplementary notes 10 to 14, the policy information is information based on natural language.

### - Supplementary note 16 -

A program causes an information processing device to execute an information processing method including:
a processing information acquisition step of acquiring information necessary for processing;
a policy information acquisition step of acquiring policy information for processing of the information; and
a processing step of performing processing in accordance with the information and the policy information,
wherein the policy information can be updated in accordance with a processing result of the processing step.

### - Supplementary note 17 -

A program causes an information processing device to execute an information processing method including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a notification step of determining whether or not an inconsistency is present in content of the policy information and, when an inconsistency is present, giving a notification.

### - Supplementary note 18 -

A program causes an information processing device to execute an information processing method including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system.

### - Supplementary note 19 -

A program causes an information processing device to execute an information processing method including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a determination step of acquiring a processing result arising in the processing step, determining whether or not the processing result aligns with the policy information, and when the determining determines that the processing result does not align with the policy information, restricting output of the processing result.

### - Supplementary note 20 -

A program causes an information processing device to execute an information processing method including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

### - Supplementary note 21 -

An information processing system includes an information processing device that executes processing including:
a processing information acquisition step of acquiring information necessary for processing;
a policy information acquisition step of acquiring policy information for processing of the information; and
a processing step of performing processing in accordance with the information and the policy information,
wherein the policy information can be updated in accordance with a processing result of the processing step.

### - Supplementary note 22 -

An information processing system includes an information processing device that executes processing including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a notification step of determining whether or not an inconsistency is present in content of the policy information and, when an inconsistency is present, giving a notification.

### - Supplementary note 23 -

An information processing system includes an information processing device that executes processing including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system.

### - Supplementary note 24 -

An information processing system includes an information processing device that executes processing including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a determination step of acquiring a processing result arising in the processing step, determining whether or not the processing result aligns with the policy information, and when the determining determines that the processing result does not align with the policy information, restricting output of the processing result.

### - Supplementary note 25 -

An information processing system includes an information processing device that executes processing including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

### - Supplementary note 26 -

An information processing method executed by an information processing device includes:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with a processing instruction and the information when the instruction and the information are inputted, and when the instruction violates the policy information, amending the instruction so as to align with the policy information and presenting an amendment result before executing the processing.

### - Supplementary note 27 -

In the information processing method according to supplementary note 26, the policy information is information based on natural language.

### - Supplementary note 28 -

In the information processing method according to supplementary note 26 or supplementary note 27, the policy information can be updated in accordance with a processing result of the processing step.

### - Supplementary note 29 -

The information processing method according to any one of supplementary notes 26 to 28 includes a notification step of determining whether or not an inconsistency is present in content of the policy information and, when an inconsistency is present, giving a notification.

### - Supplementary note 30 -

In the information processing method according to any one of supplementary notes 26 to 29, the policy information can be at least one of entered and modified in a policy information entry screen that is displayed at a design screen, component images that correspond to pre-prepared kinds of system components and flow images that represent data flows between the system components being arranged in the design screen for building a system.

### - Supplementary note 31 -

The information processing method according to any one of supplementary notes 26 to 30 includes:
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

### - Supplementary note 32 -

A program causes an information processing device to execute an information processing method including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with a processing instruction and the information when the instruction and the information are inputted, and when the instruction violates the policy information, amending the instruction so as to align with the policy information and presenting an amendment result before executing the processing.

### - Supplementary note 33 -

An information processing system includes an information processing device that executes processing including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with a processing instruction and the information when the instruction and the information are inputted, and when the instruction violates the policy information, amending the instruction so as to align with the policy information and presenting an amendment result before executing the processing.

### - Supplementary note 34 -

An information processing method executed by an information processing device includes:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system, and
for each of predetermined combinations of the component images and flow images included in the policy information entry screen, a status can be set to one of public, limited public or private, and a condition of publication of the predetermined combination to another party is controlled in accordance with the status thereof.

### - Supplementary note 35 -

In the information processing method according to supplementary note 34, the policy information is information based on natural language.

### - Supplementary note 36 -

In the information processing method according to supplementary note 34 or supplementary note 35, the policy information can be updated in accordance with a processing result of the processing step.

### - Supplementary note 37 -

The information processing method according to any one of supplementary notes 34 to 36 includes a notification step of determining whether or not an inconsistency is present in content of the policy information and, when an inconsistency is present, giving a notification.

### - Supplementary note 38 -

The information processing method according to any one of supplementary notes 34 to 37 includes a determination step of acquiring a processing result arising in the processing step, determining whether or not the processing result aligns with the policy information, and when the determining determines that the processing result does not align with the policy information, restricting output of the processing result.

### - Supplementary note 39 -

The information processing method according to any one of supplementary notes 34 to 38 includes:
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

### - Supplementary note 40 -

A program causes an information processing device to execute an information processing method including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system, and
for each of predetermined combinations of the component images and flow images included in the policy information entry screen, a status can be set to one of public, limited public or private, and a condition of publication of the predetermined combination to another party is controlled in accordance with the status thereof.

### - Supplementary note 41 -

An information processing system includes an information processing device that executes processing including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system, and
for each of predetermined combinations of the component images and flow images included in the policy information entry screen, a status can be set to one of public, limited public or private, and a condition of publication of the predetermined combination to another party is controlled in accordance with the status thereof.

### - Supplementary note 42 -

An information processing method executed by an information processing device includes:
a processing information acquisition step of acquiring information necessary for processing;
a processing step of using a pre-trained model to execute processing, the pre-trained model performing processing when the information is inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information,
wherein the execution capability information acquisition step and execution command generation step are executed by an action generator that is displayed at a design screen, component images that correspond to pre-prepared kinds of system components and flow images that represent data flows between the system components being arranged in the design screen for building a system.

### - Supplementary note 43 -

In the information processing method according to supplementary note 42, the action generator is capable of setting at least one of a name and information of a destination of the execution command generated by the action generator.

### - Supplementary note 44 -

A program causes an information processing device to execute an information processing method including:
a processing information acquisition step of acquiring information necessary for processing;
a processing step of using a pre-trained model to execute processing, the pre-trained model performing processing when the information is inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information,
wherein the execution capability information acquisition step and execution command generation step are executed by an action generator that is displayed at a design screen, component images that correspond to pre-prepared kinds of system components and flow images that represent data flows between the system components being arranged in the design screen for building a system.

### - Supplementary note 45 -

In the information processing method according to supplementary note 44, the action generator is capable of setting at least one of a name and information of a destination of the execution command generated by the action generator.

### - Supplementary note 46 -

An information processing system includes an information processing device that executes processing including:
a processing information acquisition step of acquiring information necessary for processing;
a processing step of using a pre-trained model to execute processing, the pre-trained model performing processing when the information is inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information,
wherein the execution capability information acquisition step and execution command generation step are executed by an action generator that is displayed at a design screen, component images that correspond to pre-prepared kinds of system components and flow images that represent data flows between the system components being arranged in the design screen for building a system.

### - Supplementary note 47 -

In the information processing method according to supplementary note 46, the action generator is capable of setting at least one of a name and information of a destination of the execution command generated by the action generator.

The embodiments disclosed herein are to be regarded as illustrative in all respects and not restrictive. The scope of the present disclosure is not limited to the meanings described above but is indicated by the claims, and all modifications within the scope and equivalents of the claims are intended to be included. Furthermore, the present disclosure is not limited to the embodiments described above; various modifications may be made within the scope of the claims, and embodiments obtained by appropriately combining the technical means disclosed in different embodiments are also included within the technical scope of the present disclosure.

The disclosures of Japanese Patent Application No. 2023-193286 filed November 13, 2023, No. 2024-005991 filed January 18, 2024, No. 2024-005992 filed January 18, 2024, and No. 2024-005993 filed January 18, 2024 are incorporated into the present specification by reference in their entirety. All references, patent applications and technical specifications cited in the present specification are incorporated by reference into the present specification to the same extent as if the individual references, patent applications and technical specifications were specifically and individually recited as being incorporated by reference.

## Claims

1. An information processing method executed by an information processing device, the information processing method comprising:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be updated in accordance with a processing result of the processing step.

2. An information processing method executed by an information processing device, the information processing method comprising:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a notification step of determining whether or not an inconsistency is present in content of the policy information and, when an inconsistency is present, giving a notification.

3. An information processing method executed by an information processing device, the information processing method comprising:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system.

4. An information processing method executed by an information processing device, the information processing method comprising:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a determination step of
acquiring a processing result arising in the processing step,
determining whether or not the processing result aligns with the policy information, and
when the determining determines that the processing result does not align with the policy information, restricting output of the processing result.

5. An information processing method executed by an information processing device, the information processing method comprising:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

6. The information processing method according to any one of claims 1 to 5, wherein the policy information is information based on natural language.

7. A program for causing an information processing device to execute an information processing method comprising:
a processing information acquisition step of acquiring information necessary for processing;
a policy information acquisition step of acquiring policy information for processing of the information; and
a processing step of performing processing in accordance with the information and the policy information,
wherein the policy information can be updated in accordance with a processing result of the processing step.

8. A program for causing an information processing device to execute an information processing method comprising:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a notification step of determining whether or not an inconsistency is present in content of the policy information and, when an inconsistency is present, giving a notification.

9. A program for causing an information processing device to execute an information processing method comprising:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system.

10. program for causing an information processing device to execute an information processing method comprising:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a determination step of
acquiring a processing result arising in the processing step,
determining whether or not the processing result aligns with the policy information, and
when the determining determines that the processing result does not align with the policy information, restricting output of the processing result.

11. program for causing an information processing device to execute an information processing method comprising:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

12. An information processing system comprising an information processing device that executes processing including:
a processing information acquisition step of acquiring information necessary for processing;
a policy information acquisition step of acquiring policy information for processing of the information; and
a processing step of performing processing in accordance with the information and the policy information,
wherein the policy information can be updated in accordance with a processing result of the processing step.

13. An information processing system comprising an information processing device that executes processing including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a notification step of determining whether or not an inconsistency is present in content of the policy information and, when an inconsistency is present, giving a notification.

14. An information processing system comprising an information processing device that executes processing including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system.

15. An information processing system comprising an information processing device that executes processing including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted; and
a determination step of
acquiring a processing result arising in the processing step,
determining whether or not the processing result aligns with the policy information, and
when the determining determines that the processing result does not align with the policy information, restricting output of the processing result.

16. An information processing system comprising an information processing device that executes processing including:
a processing information acquisition step of acquiring information including unstructured data necessary for processing;
a policy information acquisition step of acquiring policy information for processing of the information;
a processing step of using a pre-trained model to execute processing, the pre-trained model performing the processing in accordance with the policy information when the information and the policy information are inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

17. An information processing method executed by an information processing device, the information processing method comprising:
a processing information acquisition step of acquiring information including unstructured data necessary for processing;
a policy information acquisition step of acquiring policy information for processing of the information; and
a processing step of
using a pre-trained model to execute processing, the pre-trained model performing the processing in accordance with a processing instruction and the information when the instruction and the information are inputted, and
when the instruction violates the policy information, amending the instruction so as to align with the policy information and presenting an amendment result before executing the processing.

18. The information processing method according to claim 17, wherein the policy information is information based on natural language.

19. The information processing method according to claim 17, wherein the policy information can be updated in accordance with a processing result of the processing step.

20. The information processing method according to claim 17, further comprising a notification step of determining whether or not an inconsistency is present in content of the policy information and, when an inconsistency is present, giving a notification.

21. The information processing method according to claim 17, wherein the policy information can be at least one of entered and modified in a policy information entry screen that is displayed at a design screen, component images that correspond to pre-prepared kinds of system components and flow images that represent data flows between the system components being arranged in the design screen for building a system.

22. The information processing method according to claim 17, further comprising:
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

23. program for causing an information processing device to execute an information processing method comprising:
a processing information acquisition step of acquiring information including unstructured data necessary for processing;
a policy information acquisition step of acquiring policy information for processing of the information; and
a processing step of
using a pre-trained model to execute processing, the pre-trained model performing the processing in accordance with a processing instruction and the information when the instruction and the information are inputted, and
when the instruction violates the policy information, amending the instruction so as to align with the policy information and presenting an amendment result before executing the processing.

24. An information processing system comprising an information processing device that executes processing including:
a processing information acquisition step of acquiring information including unstructured data necessary for processing;
a policy information acquisition step of acquiring policy information for processing of the information; and
a processing step of
using a pre-trained model to execute processing, the pre-trained model performing the processing in accordance with a processing instruction and the information when the instruction and the information are inputted, and
when the instruction violates the policy information, amending the instruction so as to align with the policy information and presenting an amendment result before executing the processing.

25. An information processing method executed by an information processing device, the information processing method comprising:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system, and
for each of predetermined combinations of the component images and flow images included in the policy information entry screen, a status can be set to one of public, limited public or private, and a condition of publication of the predetermined combination to another party is controlled in accordance with the status thereof.

26. The information processing method according to claim 25, wherein the policy information is information based on natural language.

27. The information processing method according to claim 25, wherein the policy information can be updated in accordance with a processing result of the processing step.

28. The information processing method according to claim 25, further comprising a notification step of determining whether or not an inconsistency is present in content of the policy information and, when an inconsistency is present, giving a notification.

29. The information processing method according to claim 25, further comprising a determination step of
acquiring a processing result arising in the processing step,
determining whether or not the processing result aligns with the policy information, and
when the determining determines that the processing result does not align with the policy information, restricting output of the processing result.

30. The information processing method according to claim 25, further comprising:
an execution capability information acquisition step of acquiring information relating to a function capable of executing a processing result arising in the processing step; and
an execution command generation step of generating an execution command as required in accordance with the information acquired in the execution capability information acquisition step and the processing result of the information.

31. program for causing an information processing device to execute an information processing method comprising:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system, and
for each of predetermined combinations of the component images and flow images included in the policy information entry screen, a status can be set to one of public, limited public or private, and a condition of publication of the predetermined combination to another party is controlled in accordance with the status thereof.

32. An information processing system comprising an information processing device that executes processing including:
a processing information acquisition step of acquiring information including unstructured data necessary for processing;
a policy information acquisition step of acquiring policy information for processing of the information; and
a processing step of using a pre-trained model to execute processing, the pre-trained model performing the processing in accordance with the policy information when the information and the policy information are inputted,
wherein the policy information can be at least one of entered and modified in a policy information entry screen that is displayed at a design screen, component images that correspond to pre-prepared kinds of system components and flow images that represent data flows between the system components being arranged in the design screen for building a system, and
for each of predetermined combinations of the component images and flow images included in the policy information entry screen, a status can be set to one of public, limited public or private, and a condition of publication of the predetermined combination to another party is controlled in accordance with the status thereof.

33. An information processing method executed by an information processing device, the information processing method comprising:
a processing information acquisition step of acquiring information necessary for processing;
a processing step of using a pre-trained model to execute processing, the pre-trained model performing processing when the information is inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information,
wherein the execution capability information acquisition step and execution command generation step are executed by an action generator that is displayed at a design screen, component images that correspond to pre-prepared kinds of system components and flow images that represent data flows between the system components being arranged in the design screen for building a system.

34. The information processing method according to claim 33, wherein the action generator is capable of setting at least one of a name and information of a destination of the execution command generated by the action generator.

35. program for causing an information processing device to execute an information processing method comprising:
a processing information acquisition step of acquiring information necessary for processing;
a processing step of using a pre-trained model to execute processing, the pre-trained model performing processing when the information is inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information,
wherein the execution capability information acquisition step and execution command generation step are executed by an action generator that is displayed at a design screen, component images that correspond to pre-prepared kinds of system components and flow images that represent data flows between the system components being arranged in the design screen for building a system.

36. The program according to claim 35, wherein the action generator is capable of setting at least one of a name and information of a destination of the execution command generated by the action generator.

37. An information processing system comprising an information processing device that executes processing including:
a processing information acquisition step of acquiring information necessary for processing;
a processing step of using a pre-trained model to execute processing, the pre-trained model performing processing when the information is inputted;
an execution capability information acquisition step of acquiring information relating to a function capable of executing a processing result arising in the processing step; and
an execution command generation step of generating an execution command as required in accordance with the information acquired in the execution capability information acquisition step and the processing result of the information,
wherein the execution capability information acquisition step and execution command generation step are executed by an action generator that is displayed at a design screen, component images that correspond to pre-prepared kinds of system components and flow images that represent data flows between the system components being arranged in the design screen for building a system.

38. The information processing system according to claim 37, wherein the action generator is capable of setting at least one of a name and information of a destination of the execution command generated by the action generator.
